# EUROPEAN PATENT SPECIFICATION

(11) **EP 2 596 055 B1**
(45) Date of publication and mention of the grant of the patent: **20.08.2014**
(21) Application number: 11734057.0
(22) Date of filing: 11.07.2011
(51) Int. Cl.: C08K 5/00, C08K 5/52, C08K 9/02, C08K 5/5313, C08K 5/3492, C08K 3/32, C09D 167/03, H01B 7/295

(54) **FLAME RETARDANT INSULATED ELECTRICAL WIRE**
FLAMMENHEMMENDER ISOLIERTER ELEKTRODRAHT
FIL ÉLECTRIQUE ISOLÉ RETARDATEUR DE FLAMME

(30) Priority: 19.07.2010 EP 10170009
(43) Date of publication of application: 29.05.2013
(73) Proprietor: DSM IP Assets B.V., 6411 TE Heerlen (NL)
(72) Inventor: SCHMIDT, Angelika, 52538 Selfkant (DE)
(74) Representative: Dorrestijn, Antoon
(86) International application number: PCT/EP2011/061754
(87) International publication number: WO 2012/010453

(56) References cited:
- EP-A1- 2 057 220
- WO-A1-2009/047353

## Description

The invention relates to an insulated wire, comprising at least one electrically conductive core and a part of a polymer composition.

Electrical wires in the context of this patent application also include electrical cables and electrical cords. In particular the invention relates to flame retardant insulated electrical wires for electric and/or electronic equipment.

The part of the polymer composition may be an insulating layer surrounding the at least one electrically conductive core and/or a jacket surrounding the at least one electrically conductive core, surrounded by the insulating layer and/or a strain relief part.

The wires for electric and/or electronic equipment may be used in the equipment, but also outside the equipment, for example to connect the equipment to a power supply, or to connect the equipment with another equipment. Examples are the connection of a mouse or a key board to a desk top personal computer.

The strain relief part is connected to the jacket of the cable and the plug, to relief the strain between the cable and the plug.

Electrical wires, especially the electrical wires for electric and/or electronic equipment, are required to have various characteristic, including flexibility, flame retardancy, heat resistance, abrasion resistant, tensile strength etc.

Conventionally as the polymer composition for the insulating layer a plasticized polyvinyl composition has been used. These polymer compositions however pose environmental problems. When the wires are not properly recycled after their service life, the plasticizer or heavy metals also being present in the composition may be oozed out.

Many replacements have been proposed for plasticized PVC, based on halogen free polymers and halogen free flame retarders, however often fire retardancy was insufficient to obtain a level of flame retardancy sufficient for wires, or the load of flame retarders in the composition is very high, so that mechanical properties of the polymer composition are inadequate.

In WO2009/047353 a wire is disclosed containing an insulating layer of a polymer composition containing as one of its components a metal salt of a phosphinic acid. The flame retardant properties of the wire are at an acceptable level, and the wire shows desirable further properties.

However the metal salt of the phosphinic acid is difficult to produce, so that the cost price is very high. Therefore in many applications it is for economic reasons not possible or at least difficult to replace the very cheap plasticized PVC with the polymer composition containing the metal phosphinate.

An objective of the present invention is to provide a flame retardant insulated wire, comprising an electrical conductive core and an insulating layer of a polymer composition surrounding the electrically conductive core, which polymer composition shows a sufficient high level of flame retardancy, showing desirable further properties and is more economic to produce.

Surprisingly such a wire is characterized in that the polymer composition contains:
(A) a metal salt of a phosphinic acid and/or a diphosphinic acid and or a polymer thereof,
(B) ammonium polyphosphate
(C) an oligomer or a polymer of a triazine derivative.

The total amount of flame retardant may be less, improving the mechanical properties of the polymer composition. Furthermore only a limited amount of the expensive metal salts of a phosphinic acid and/or a diphosphinic acid and or a polymer need to be used.

From EP-B-2057220 a polymer composition is known containing (B) certain ammonium polyphosphates, (C) certain triazines and further one or more further halogen free flame retardants, chosen out of a large group. However wires are not mentioned in EP-B-2047220. Moreover metal salts of a phosphinic acid and/or a diphosphinic acid and or a polymer thereof are not exemplified and it is unexpected that the good results with the composition according to the invention is obtained for wires.

Preferably the polymer composition contains:
(A) a metal salt of a phosphinic acid of the formula [R¹R²P(O)O]⁻ₘM^{m+} (formula I) and/or a diphosphinic acid of the formula [O(O)PR¹-R³-PR²(O)O]²⁻ₙMₓ^{m+} (formula II), and /or a polymer thereof, wherein
   - R¹ and R² are equal or different substituents chosen from the group consisting of hydrogen, linear, branched and cyclic C1-C6 aliphatic groups, and aromatic groups,
   - R³ is chosen from the group consisting of linear, branched and cyclic C1-C10 aliphatic groups and C6-C10 aromatic and aliphatic-aromatic groups,
   - M is a metal chosen from the group consisting of Mg, Ca, Al, Sb, Sn, Ge, Ti, Zn, Fe, Zr, Ce, Bi, Sr, Mn, Li, Na, and K, and
   - m, n and x are equal or different integers in the range of 1-4.
(B) particles of ammoniumpolyphasphate of crystal form II and/or derivatives, being coated with melamin, melamin resin, melamin derivatives, siloxanes or polystyrols, or being coated and crosslinked with melamin, melamin resin, melamin derivatives, siloxanes or polystyrols,
(C) oligomers or polymers of 1,3,5-triazine derivate or a mixture of such derivates of the general formulae 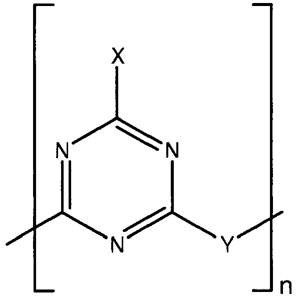
where
X = a morpholino residue, a pepiridino residue or a group derived from piperazine
Y = a group derived from piperazine
n is an integer of 3 or more.

### Polymers in the polymer composition

The polymer composition of the wire according to the invention preferably contains a thermoplastic polymer selected from the group consisting of a copolyester elastomer (TPE-E), a copolyamide elastomer (TPE-A), a copolyurethane elastomer (TPE-U), and combinations thereof or a polyolefin.

Such polymers are highly suitable for use in cables, since they have a good flexibility, also when combined with the flame retardants into the composition according to the invention.

### TPE-E / TPE-A

Copolyester elastomers and copolyamide elastomers are thermoplastic polymers with elastomeric properties comprising hard blocks consisting of respectively polyester segments or polyamide segments, and soft blocks consisting of segments of another polymer. Such polymers are also known as block-copolymers. The polyester segments in the hard blocks of the copolyester elastomers are generally composed of repeating units derived from at least one alkylene diol and at least one aromatic or cycloaliphatic dicarboxylic acid. The polyamide segments in the hard blocks of the copolyamide elastomers are generally composed of repeating units from at least one aromatic and/or aliphatic diamine and at least one aromatic or aliphatic dicarboxylic acid, and or an aliphatic amino-carboxylic acid.

The hard blocks typically consist of a polyester or polyamide having a melting temperature or glass temperature, where applicable, well above room temperature, and may be as high as 300 °C or even higher. Preferably the melting temperature or glass temperature is at least 150 °C, more preferably at least 170 °C or even at least 190 °C. Still more preferably the melting temperature or glass temperature of the hard blocks is in the range of 200 - 280 °C, ort even 220 - 250 °C. The soft blocks typically consist of segments of an amorphous polymer having a glass transition temperature well below room temperature and which temperature may be as low as -70 °C or even lower. Preferably the glass temperature of the amorphous polymer is at most 0 °C, more preferably at most -10 °C or even at most -20 °C. Still more preferably the glass temperature of the soft blocks is in the range of -20 - -60 °C, or even -30 - -50 °C.

Suitably, the copolyester elastomer is a copolyesterester elastomer, a copolycarbonateester elastomer, and /or a copolyetherester elastomer; i.e. a copolyester block copolymer with soft blocks consisting of segments of polyesters, polycarbonate or, respectively, polyether. Suitable copolyesterester elastomers are described, for example, in EP-0102115-B1. Suitable copolycarbonateester elastomers are described, for example, in EP-0846712-B1. Copolyester elastomers are available, for example, under the trade name Arnitel, from DSM Engineering Plastics B.V. The Netherlands. Suitably, the copolyamide elastomer is a copolyetheramide elastomer. Copolyetheramide elastomers are available, for example, under the trade name PEBAX, from Elf Atochem, France.

Preferably, the block-copolymer elastomer in the flame retardant elastomeric composition is a copolyester elastomer, more preferably a copolyetherester elastomer.

Copolyetherester elastomers have soft segments derived from at least one polyalkylene oxide glycol. Copolyetherester elastomers and the preparation and properties thereof are in the art and for example described in detail in Thermoplastic Elastomers, 2nd Ed., Chapter 8, Carl Hanser Verlag (1996) ISBN 1-56990-205-4, Handbook of Thermoplastics, Ed. O. Otabisi, Chapter 17, Marcel Dekker Inc., New York 1997, ISBN 0-8247-9797-3, and the Encyclopedia of Polymer Science and Engineering, Vol. 12, pp. 75-117 (1988), John Wiley and Sons, and the references mentioned therein.

The aromatic dicarboxylic acid in the hard blocks of the polyetherester elastomer suitably is selected from the group consisting of terephthalic acid, isophthalic acid, phthalic acid, 2,6-naphthalenedicarboxylic acid and 4,4-diphenyldicarboxylic acid, and mixtures thereof. Preferably, the aromatic dicarboxylic acid comprises terephthalic acid, more preferably consists for at least 50 mole %, still more preferably at least 90 mole %, or even fully consists of terephthalic acid, relative to the total molar amount of dicarboxylic acid.

The alkylene diol in the hard blocks of the polyetherester elastomer suitably is selected from the group consisting of ethylene glycol, propylene glycol, butylene glycol, 1,2-hexane diol, 1,6-hexamethylene diol, 1,4-butane diol, benzene dimethanol, cyclohexane diol, cyclohexane dimethanol, and mixtures thereof. Preferably, the alkylene diol comprises ethylene glycol and/or 1,4 butane diol, more preferably consists for at least 50 mole %, still more preferably at least 90 mole %, or even fully consists of ethylene glycol and/or 1,4 butane diol, relative to the total molar amount of alkylene diol.

The hard blocks of the polyetherester elastomer most preferably comprise or even consist of polybutylene terephthalate segments.

Suitably, the polyalkylene oxide glycol is a homopolymer or copolymer on the basis of oxiranes, oxetanes and/or oxolanes. Examples of suitable oxiranes, where upon the polyalkylene oxide glycol may be based, are ethylene oxide and propylene oxide. The corresponding polyalkylene oxide glycol homopolymers are known by the names polyethylene glycol, polyethylene oxide, or polyethylene oxide glycol (also abbreviated as PEG or PEO), and polypropylene glycol, polypropylene oxide or polypropylene oxide glycol (also abbreviated as PPG or PPO), respectively. An example of a suitable oxetane, where upon the polyalkylene oxide glycol may be based, is 1,3-propanediol. The corresponding polyalkylene oxide glycol homopolymer is known by the name of poly(trimethylene)glycol. An example of a suitable oxolane, where upon the polyalkylene oxide glycol may be based, is tetrahydrofuran. The corresponding polyalkylene oxide glycol homopolymer is known by the name of poly(tretramethylene)glycol (PTMG) or polytetrahydrofuran (PTHF). The polyalkylene oxide glycol copolymer can be random copolymers, block copolymers or mixed structures thereof. Suitable copolymers are, for example, ethylene oxide / polypropylene oxide block-copolymers, (or EO/PO block copolymer), in particular ethylene-oxide-terminated polypropylene oxide glycol.

The polyalkylene oxide can also be based on the etherification product of alkylene diols or mixtures of alkylene diols or low molecular weight poly alkylene oxide glycol or mixtures of the aforementioned glycols.

Preferably, the polyalkylene oxide glycol is selected from the group consisting of polypropylene oxide glycol homopolymers (PPG), ethylene oxide / polypropylene oxide block-copolymers (EO/PO block copolymer) and poly(tretramethylene)glycol (PTMG), and mixtures thereof. Most preferably the TPE-E contains hard blocks polybutyleneterephtalate and soft blocks of PTMG.

### TPE-U

The urethane-based thermoplastic elastomer is a resin synthesized by the urethane reaction in which an isocyanate compound is reacted with a compound having active hydrogen, e.g., polyol, optionally in the presence of a chain-extending agent or another additive. It may be produced when the foam is produced or beforehand, or a commercial one.

The isocyanate compounds include aromatic diisocyanates of 6 to 20 carbon atoms (excluding the carbon atom in NCO group), aliphatic diisocyanates of 2 to 18 carbon atoms, alicyclic diisocyanates of 4 to 15 carbon atoms, aromatic aliphatic diisocyanates of 4 to 15 carbon atoms, and modifications thereof (e.g., the modifications containing urethane group, carbodiimide group, allophanate group, urea group, biuret group, urethodione group, urethoimine group, isocyanurate group and oxazolidone group).

More concretely, the isocyanate compounds include tolylene diisocyanate, diphenyl methane diisocyanate, naphthalene diisocyanate, hexamethylene diisocyanate, dicyclomethane diisocyanate, isophorone diisocyanate, xylene diisocyanate, norbornane dimethyl isocyanate and so on.

The compounds having active hydrogen include polyols, polyamine compound, and so on. The concrete examples of polyol compound include ester-based, adipate-based, ether-based, lactone-based and carbonate-based compounds. The chain-extending agents include low-molecular-weight diols, alkylene diamines, or the like.

The ester-based and adipate-based polyol compounds include compounds produced by condensation reaction between a polyhydric alcohol (e.g., ethylene glycol, propylene glycol, butanediol, butenediol, hexanediol, pentanediol, neopentyldiol or pentanediol) and dibasic acid (adipic acid, sebacic acid, azelaic acid, terephthalic acid, isophthalic acid, maleic acid, aromatic carboxylic acid or the like).

The ether-based polyol compounds, for example, include polyethylene glycol, polypropylene ether glycol, polytetramethylene ether glycol, polyhexamethylene ether glycol and so on. The lactone-based polyols include polycaprolactone glycol, polypropiolactone glycol, polyvalerolactone glycol and so on.

The carbonate-based polyols include the compounds obtained by dealcoholization of a polyhydric alcohol (e.g., ethylene glycol, propylene glycol, butanediol, pentanediol, octadiol, nonanediol or the like) with a compound, e.g., diethylene carbonate or dipropylene carbonate.

The commercial urethane-based thermoplastic elastomers include, for example, Pellethane 2103 series (PTMG ether type), 2102 series (caproester type), 2355 series (polyester adipate type) and 2363 series (PTMG ether type) (trade names of Dow Chemical); Resamine P-1000 and P-7000 series (adipate ester type), P-2000 series (ether type), P-4000 series (caprolactone type) and P-800 series (carbonate type) (trade names of Dainichiseika Color and Chemicals); Pandex T series (trade name of DIC Bayer Polymer); Miractone E and P types (trade names of Nippon Miractone); Estolan (trade name of Takeda Burdaysh Urethane); and Morcene (trade name of Morton). They are hereinafter sometimes referred to as thermoplastic polyurethane elastomers (TPU).

### Polyolefins

If polyolefins are used, they preferably have a hardness of < 80 shore A. Examples of preferred polyolefins include LLDPE, LDPE. In a preferred embodiment polyolefins are used that have a density below 930 kg/m³, preferably lower than 920 kg/m³, more preferably lower than 910 kg/m³.

Preferably the polyolefin has a melting point below 125 ºC, more preferably below 120 ºC, most preferably below 115 ºC. In that case the composition according to the invention is highly flexible.

It is also possible that the polyolefin has been cross-linked, for example by using a peroxide. It is well known to the skilled person to obtain such wires.

### Component (A)

Preferred phosphinates are aluminium-, calcium- and zinc-phosphinates, i.e. metal phosphinates wherein the metal M = Al, Ca, Zn respectively, and combinations thereof. Also preferred are metal phosphinates wherein R¹ and R² are the same or different and are equal to H, linear or branched C₁-C₆-alkyl groups, and/or phenyl. Particular preferably, R¹, R² are the same or different and are chosen from the group consisting of hydrogen (H), methyl, ethyl, n-propyl, iso-propyl, n-butyl, tert.-butyl, n-pentyl and phenyl. More preferably, R¹ and R² are the same or different and are chosen from the group of substituents consisting of H, methyl and ethyl.

Also preferably R³ is chosen from the group consisting of methylene, ethylene, n-propylene, iso-propylene, n-butylene, tert.-butylene, n-pentylene, n-octylene, n-dodecylene, phenylene and naphthylene.

Highly preferably, the metal phosphinate comprises a hypophosphate and/or a C₁-C₂ dialkylphosphinate, more preferably Ca- hypophosphate and/or an Al-C₁-C₂ dialkylphosphinate, i.e. Al-dimethylphosphinate, Al-methylethylphosphinate and/or Al-diethylphosphinate.

### Components (B) and (C)

Component (B) preferably is ammoniumpolyphophate coated with melamin or coated and cross-linked with melamin.

Component (C) preferably is a polymer of 2,4-piperazine-1,4-yl-6-morpholine-4-yl-1,3,5-triazine or 2-piperaxinylene-4-piperidino-1,3,5-triazine, most preferably it is a polymer of 2-piperazinyl-4-morpholino-1,3,5-triazine.

The ratio (B):(C) is preferably between 10:1 and 1:1, more preferably between 6:1 to 2:1, most preferably between 5:1 and 3:1.

For components (B) and (C) reference is made to EP-2057220. The components are sold by "Chemische Fabric Budenheim".

### Component (D)

In a preferred embodiment the composition according to the invention contains as component (D) a nitrogen containing or nitrogen/phosphor containing synergist. This synergist can be any nitrogen or nitrogen and phosphor containing compound that itself is a flame retardant and/or is a flame retardant synergist for phosphinate flame retardants. Suitable nitrogen containing and nitrogen/phosphor containing compounds that can be used as component (D) are described, for example in PCT/EP97/01664, DE-A-197 34 437, DE-A-197 37 72, and DE-A-196 14 424.

Preferably, the nitrogen containing synergist is chosen from the group consisting of benzoguanamine, tris(hydroxyethyl)isocyanurate, allantoine, glycouril, melamine, melamine cyanurate, dicyandiamide, guanidine and carbodiimide, and derivatives thereof.

More preferably, the nitrogen containing synergist comprises a condensations product of melamine. Condensations products of melamine are, for example, melem, melam and melon, as well as higher derivatives and mixtures thereof. Condensations products of melamine can be produced by a method as described, for example, in PCT/WO 96/16948.

Preferably, the nitrogen/phosphor containing flame retardant is a reaction product of melamine with phosphoric acid and/or a condensation product thereof. With the reaction product of melamine with phosphoric acid and/or a condensation product thereof are herein understood compounds, which result from the reaction of melamine or a condensation products of melamine are, for example, melem, melam and melon, with a phosphoric acid.

Examples include dimelaminephosphate, dimelamine pyrophosphate, melamine phosphate, melamine polyphosphate, melamine pyrophosphate, melamine polyphosphate, melam polyphosphate, melon polyphosphate and melem polyphosphate, as are described for example in PCT/WO 98/39306.More preferably the nitrogen/phosphor containing flame retardant is melamine polyphosphate.

Also preferably, the nitrogen/phosphor containing flame retardant is a reaction product of ammonia with phosphoric acid or a polyphosphate modification thereof. Suitable examples include ammonium hydrogenphosphate, ammonium dihydrogenphosphate and ammonium polyphosphate. More preferably the nitrogen/phosphor containing flame retardant comprises ammonium polyphosphate.

Preferably (D) is melamine cyanurate or melam.

### SEBS/TPO

The thermoplastic composition according to the invention preferably contains a styrenic block copolymer and/or an olefinic thermoplastic elastomer (TPO), because properties like good softness, surface smoothness, low density and high flexibility are obtained.

### SEBS

The styrenic block copolymer comprised by the flame retardant elastomeric composition in the insulated wire according to the invention include diblock or triblock polymers or combinations thereof. Styrenic block copolymers have good surface quality, high dimensional stability and constant mechanical properties almost up to the softening temperature.

In a preferred embodiment, the styrenic block copolymer, relative to the total weight of the polymer component in the flame retardant elastomeric composition, is in the range of 15 to 40wt% and more preferably in the range of 20 to 30 wt.%.

Preferred styrenic block copolymers include an acrylonitrile-styrene copolymer (AS), an acrylonitrile-butadiene-styrene copolymer (ABS), a styrenebutadiene-styrene (SBS) copolymer, a styrene-isoprene-styrene (SIS) copolymer, a styrene-ethylene-butylene-styrene (SEBS) copolymer, a styrene-acrylonitrile-ethylenepropylene-ethylidene norbornene copolymer (AES), and a hydrogenerated product thereof. Hydrogenated block copolymers include an ethylene/butylene in the midblock (S-(EB/S)-S) and polystyrene-b-poly(ethylene/propylene), polystyrene-b-poly(ethylene/propylene)-b-polystyrene, polystyrene-b-poly(ethylene/butylene)-b-polystyrene and polystyrene-b-poly(ethylene-ethylene/propylene)-b-polystyrene.

Preferably, the styrenic block copolymer is a hydrogenated styrenic block copolymer as this class of compound exhibits excellent UV resistant properties.

Particularly preferred styrenic block copolymers includes, a styrene-ethylene-butylene-styrene (SEBS) copolymer or a styrene-ethylene/propylene-styrene (SEPS). The styrenic block copolymers may be used alone or in combination.

The styrenic block copolymers preferably have a styrene content, relative to the total weight of the styrenic block copolymer, of at least 10 wt.%, more preferably at least 20 wt.%, more preferably at least 30 wt.%, even more preferably at least 35 wt.% and most preferably at least 40 wt.%. It has been found that the higher the styrenic content the less flame retardant components (B), (E) and (F) is required to achieve the same level for flame retardancy. The styrene content, relative to the total weight of the styrenic block copolymer, is preferably no more than 70 wt. % and more preferably no more than 60 wt.%. Too high a styrene content tends to result in stiffer compositions which are not suitable for cable and wire applications.

The styrene content is determined according to the method outlined in ISO 5478:2006.

Preferable the styrenic block copolymer has a MFI of at least 2 g/l0min (230°C/2.16 kg), and more preferably 5 g/l0min (230°C/2.16 kg). A higher MFI contributes to a smoother surface of the resultant cables. Preferably the MFI is at most 50 g/10min.

### Olefinic thermoplastic elastomers (TPO)

Olefinic thermoplastic elastomers, within the scope of the present invention, include uncrosslinked olefinic thermoplastic elastomers and thermoplastic vulcanizates (crossed linked thermoplastic elastomers). TPOs impart rubber-like properties, such as softness and flexibility, which translate into an increase consumer appeal in the resultant insulated wires. TPOs may also provide cost benefits in applications in which heat resistance, flame retardancy requirements are low.

TPOs have polyolefinic matrices, preferably crystalline, through which thermoplastic or thermoset elastomers are generally uniformly distributed. Examples of TPOs include EPM and EPDM thermoset materials distributed in a crystalline polypropylene matrix, cross-linked or uncrosslinked. Any conventional TPO having the desired softness, flexibility and strength may be used in the present invention. Although not intended to be limiting, examples of suitable TPOs for use in the present invention include those prepared by blending an olefinic thermoplastic and either an ethylene copolymer or terpolymer, such as disclosed in U.S. Pat. No. 4,990,566 to Hert, or a nitrile rubber, such as disclosed in U.S. Pat. No. 4,591,615 to Aldred et al, the disclosure of both of which are incorporated herein by reference.

The polyolefin preferably is a single site catalyst polymerised polyolefin. Examples of single site catalysts are metallocene catalysts. The polyolefins preferably as their main component comprise ethylene or propylene. In a further embodiment copolymers of ethylene with 1-butene, 1-hexene or 1-octene, manufactured with a metallocene catalyst are used, also referred to as 'plastomers'.

The composition might further contain usual additives, like example antioxidants, dyes or pigments, UV absorbers, hydrolytic stabilizers, anti-static agents, lubricants etc.

### Total composition

The polymer composition according to the invention preferably consists of:
3 -10 wt. % of component (A)
15 - 30 wt. % of component (B) and (C), the ratio (B): (C) is between 6 :1 and 2 : 1
0 - 10 wt. % of component (D)
0.1 - 3 wt. % of usual additives,
the balance being polymer constituents.

More preferably the polymer composition consists of:
4 - 7 wt. % of component (A)
10 - 22 wt. % of component (B) and (C), the ratio (B): (C) is between 5 :1 and 3 : 1
2 - 7 wt. % of component (D)
0.1 - 3 wt. % of usual additives,
the balance being polymer constituents.

### Examples and comparative experiments

Materials used:
Arnitel: Arnitel® EM 400, a thermoplastic copolyester elastomer based on polybutylene terephthalate hard blocks and PTMG soft blocks.
Kraton: Kraton® A RP6936HS, an SEBS block copolymer.
Exolit: Exolit® OP1230, Al-diethylphosphinate (DEPAL).
Melapur® 200, Melamine polyphosphate.
Budit ®3167, Ammonium polyphosphate coated with melamine (76 wt %), triazine (16 wt. %) and melamine cyanurate (8 wt. %).
Budit ®3178, 1) Ammonium polyphosphate coated with melamine (76 wt.%), 2) triazine (16.wt. %) and 3) melamine cyanurate (8 wt. %) and at 100 parts by weight of 1) + 2) + 3) 5 parts by weight of Zn pyrophosphate.
Budit® 3168, as Budit® 3167, however coated with melamine resin instead of melamine.
ZnBo: zinc borate.

Compositions were tested to according to UL1581/UL62. Results are given in table 1 and 2.

### Comparative experiment A.

A composition according to WO2009/047353 was tested , consisting of:

| | |
|---|---|
| Arnitel | 46.95 wt.% |
| Kraton | 25 wt.% |
| Exolit | 16 wt.% |
| Melapur | 8 wt.% |
| ZnBo | 1.25 wt.% |
| Additives | 2.8 wt.% |

### Comparative experiment B and C

As comparative experiment A, however as flame retardants instead of Exolit, Melapur and ZnBo (together 26.25 wt. %), 25 parts of Budit 3167 and 3168 were used, the remainder being an extra amount (1,25 wt. %) Arnitel.

### Comparative D (composition according to the examples of EP-2057220)

As comparative A, however as flame retardants instead of Exolit, Melapur and ZnBo (together 26.25 wt. %), 30 parts of Budit 3178 were used, the amount of Arnitel being reduced with 3.75 wt. %.

**Tabel 1.**

| Comparative exp. | A | B | C | D |
|---|---|---|---|---|
| Tensile strength [MPa] | 8.3 | 11.8 | 11.6 | 9.2 |
| Strain at break [%] | 130 | 466 | 477 | 646 |
| Retention elongation at break 136ºC, 168h [%] | 75 | 94 | - | 98 |
| hardness [shore A] | 85 | 89 | 89 | 88.7 |
| VW-1(jacket)* | pass | fail | fail | pass |

| | | | | |
|---|---|---|---|---|
| *flame retardant test according to UL1581 | | | | |

In table 2 the results are given for examples I - IV. The compositions of the examples are the same as for comparative A, however as flame retardants instead of Exolit, Melapur and ZnBo (together 26.25 wt. %), Budt 3167 and Exolit were used in the amounts indicated in table 2. The amount of Arnitel was adjusted to arrive at 100% for the total composition, as was done in the comparative experiments.

**Tabel 2.**

| Example | I | II | III | IV |
|---|---|---|---|---|
| Budit 3167 (wt.%) | 15 | 17 | 20 | 10 |
| Exolit (wt.%) | 5 | 5 | 5 | 8 |
| Tensile strength [MPa] | 10.1 | 10 | 9.8 | 9.5 |
| Strain at break [%] | 721 | 706 | 694 | 600 |
| Retention elongation at break 136ºC, 168h [%] | 83 | 99 | 78 | 81 |
| hardness shore A] | 88 | 88 | 88.5 | 87 |
| VW-1(jacket)* | pass | pass | pass | pass |

| | | | | |
|---|---|---|---|---|
| *flame retardant test according to UL1581 | | | | |

The flame retardant properties of the compositions according to the examples are at a good level, with a lower load of flame retardants compared to the closest prior art (comparative experiment A). The mechanical properties are better than of the compositions according to the closest prior art. Surprisingly with the compositions according to the invention better results are obtained in wires than with the preferred composition of EP-2057220.

Furthermore a notable decrease in cost price is observed, because of the reduced amount of DEPAL.

## Claims

1. An insulated wire, comprising at least one electrically conductive core and a part of a polymer composition, **characterized in that** the polymer compositions contains:
(A) a metal salt of a phosphinic acid and/or a diphosphinic acid and or a polymer thereof,
(B) ammoniumpolyphosphate
(C) an oligomer or a polymer of a triazine derivative.

2. Wire according to claim 1, wherein the polymer composition contains:
(A) a metal salt of a phosphinic acid of the formula [R¹R²P(O)O]⁻ₘM^{m+} (formula I) and/or a diphosphinic acid of the formula [O(O)PR¹-R³-PR²(O)O]²⁻ₙMₓ^{m+} (formula II), and /or a polymer thereof, wherein
- R¹ and R² are equal or different substituents chosen from the group consisting of hydrogen, linear, branched and cyclic C1-C6 aliphatic groups, and aromatic groups,
- R³ is chosen from the group consisting of linear, branched and cyclic C1-C10 aliphatic groups and C6-C10 aromatic and aliphatic-aromatic groups,
- M is a metal chosen from the group consisting of Mg, Ca, Al, Sb, Sn, Ge, Ti, Zn, Fe, Zr, Ce, Bi, Sr, Mn, Li, Na, and K, and
- m, n and x are equal or different integers in the range of 1-4.
(B) particles of ammoniumpolyphosphate of crystal form II and/or derivatives, being coated with melamin, melamin resin, melamin derivatives, siloxanes or polystyrols, or being coated and crosslinked with melamin, melamin resin, melamin derivatives, siloxanes or polystyrols,
(C) oligomers or polymers of 1,3,5-triazine derivate or a mixture of such derivates of the general formulae 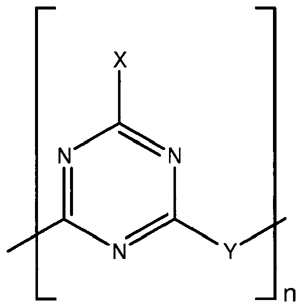 where
X = a morpholino residue, a pepiridino residue or a group derived from piperazine
Y = a group derived from piperazine
n is an integer of 3 or more.

3. Wire according to any one of claims 1 or 2, wherein the polymer composition contains a thermoplastic copolyester elastomer (TPE-E).

4. Wire according to any one of the preceding claims, wherein component (A) is Al-dimethylphosphinate, Al-methylethylphosphinate and/or Al-diethylphosphinate.

5. Wire according to any one of the preceding claims, wherein component (B) is ammonium polyphosphate coated with melamin or a melamin resin or coated with melamin or a melamin resin and cross-linked with melamin.

6. Wire according to any one of the preceding claims, wherein component (C) is polymer of 2-piperazinyl-4-morpholino-1,3,5-triazine, 2-piperaxinylene-4-piperidino-1,3,5-triazine or of 2,4-piperazine-1,4-yl-6-morpholine-4-yl-1,3,5-triazine.

7. Wire according to any one of the preceding claims, wherein the polymer composition contains a styrenic block copolymer.

8. Wire according to any one of the preceding claims, wherein the polymer composition contains:
(D) a nitrogen containing or a nitrogen/phosphor containing synergist.

9. Wire according to any one of the preceding claims, wherein the polymer composition consist of:
3 - 10 wt. % of component (A)
15 - 30 wt. % of component (B) and (C), the ratio (B) : (C) is between 6 :1 and 2: 1
0 - 10 wt. % of component (D)
0.1 - 3 wt. % of usual additives,
the balance being polymer constituents.

10. Wire according to claim 9, wherein the polymer composition consists of:
4 - 7 wt. % of component (A)
15 - 25 wt. % of component (B) and (C), the ratio (B) : (C) is between 5 :1 and 3: 1
2 - 7 wt. % of component (D)
0.1 - 3 wt. % of usual additives,
the balance being polymer constituents.

11. Wire according to any one of the preceeding claims, wherein the part of the polymer composition is an insulating layer surrounding the at least one electrically conductive core and/or a jacket surrounding the at least one electrically conductive core, surrounded by the insulating layer and/or a strain relief part.

## Patentansprüche

1. Isolierter Draht, umfassend mindestens einen elektrisch leitenden Kern und einen Teil aus einer Polymerzusammensetzung, **dadurch gekennzeichnet, dass** die Polymerzusammensetzung:
(A) ein Metallsalz einer Phosphinsäure und/oder einer Diphosphinsäure und/oder eines Polymers davon,
(B) Ammoniumpolyphosphat,
(C) ein Oligomer oder ein Polymer eines Triazinderivats
enthält.

2. Draht nach Anspruch 1, wobei die Polymerzusammensetzung:
(A) ein Metallsalz einer Phosphinsäure der Formel [R¹R²P (O) O] ⁻ₘM^{m+} (Formel I) und/oder einer Diphosphinsäure der Formel [O(O)PR1-R³-PR² (O) O] ²⁻ₙMₓ^{m+} (Formel II) und/oder eines Polymers davon, wobei
- R¹ und R² gleiche oder verschiedene Substituenten sind, die aus der Gruppe bestehend aus Wasserstoff, linearen, verzweigten und cyclischen C1-C6-aliphatischen Gruppen und aromatischen Gruppen ausgewählt sind,
- R³ aus der Gruppe bestehend aus linearen, verzweigten und cyclischen C1-C10-aliphatischen Gruppen und C6-C10-aromatischen und aliphatisch-aromatischen Gruppen ausgewählt ist,
- M ein Metall ist, das aus der Gruppe bestehend aus Mg, Ca, Al, Sb, Sn, Ge, Ti, Zn, Fe, Zr, Ce, Bi, Sr, Mn, Li, Na und K ausgewählt ist, und
- m, n und x gleiche oder verschiedene ganze Zahlen im Bereich von 1-4 sind,
(B) Teilchen von Ammoniumpolyphosphat der Kristallform II und/oder Derivate, die mit Melamin, Melaminharz, Melaminderivaten, Siloxanen oder Polystyrolen beschichtet sind oder mit Melamin, Melaminharz, Melaminderivaten, Siloxanen oder Polystyrolen beschichtet und vernetzt sind,
(C) Oligomere oder Polymere eines 1,3,5-Triazinderivats oder einer Mischung derartiger Derivate der allgemeinen Formel 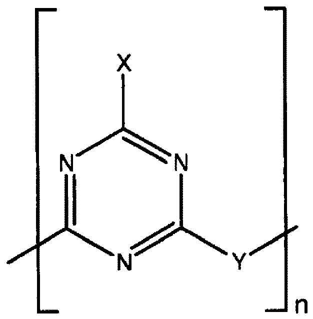 wobei
X = ein Morpholinorest, ein Piperidinorest oder eine von Piperazin abgeleitete Gruppe
Y = eine von Piperazin abgeleitete Gruppe
n eine ganze Zahl mit einem Wert von 3 oder mehr ist,
enthält.

3. Draht nach Anspruch 1 oder 2, wobei die Polymerzusammensetzung ein thermoplastisches Copolyesterelastomer (TPE-E) enthält.

4. Draht nach einem der vorhergehenden Ansprüche, wobei es sich bei der Komponente (A) um Al-Dimethylphosphinat, Al-Methylethylphosphinat und/oder Al-Diethylphosphinat handelt.

5. Draht nach einem der vorhergehenden Ansprüche, wobei es sich bei Komponente (B) um Ammoniumpolyphosphat, das mit Melamin oder einem Melaminharz beschichtet oder mit Melamin oder einem Melaminharz beschichtet und mit Melamin vernetzt ist, handelt.

6. Draht nach einem der vorhergehenden Ansprüche, wobei es sich bei Komponente (C) um ein Polymer von 2-Piperazinyl-4-morpholino-1,3,5-triazin, 2-Piperazinylen-4-piperidino-1,3,5-triazin oder 2,4-Piperazin-1,4-yl-6-morpholin-4-yl-1,3,5-triazin handelt.

7. Draht nach einem der vorhergehenden Ansprüche, wobei die Polymerzusammensetzung ein Styrolblockcopolymer enthält.

8. Draht nach einem der vorhergehenden Ansprüche, wobei die Polymerzusammensetzung:
(D) einen Stickstoff enthaltenden oder einen Stickstoff/Phosphor enthaltenden Synergisten enthält.

9. Draht nach einem der vorhergehenden Ansprüche, wobei die Polymerzusammensetzung aus: 3 - 10 Gew.-% Komponente (A)
15 - 30 Gew.-% Komponente (B) und Komponente (C), wobei das Verhältnis (B):(C) zwischen 6:1 und 2:1 liegt,
0 - 10 Gew.-% Komponente (D)
0,1 - 3 Gew.-% üblicher Additive
besteht, wobei es sich bei dem Rest um Polymerbestandteile handelt.

10. Draht nach Anspruch 9, wobei die Polymerzusammensetzung aus:
4 - 7 Gew.-% Komponente (A)
15 - 25 Gew.-% Komponente (B) und Komponente (C), wobei das Verhältnis (B):(C) zwischen 5:1 und 3:1 liegt,
2 - 7 Gew.-% Komponente (D)
0,1 - 3 Gew.-% üblicher Additive
besteht, wobei es sich bei dem Rest um Polymerbestandteile handelt.

11. Draht nach einem der vorhergehenden Ansprüche, wobei es sich bei dem Teil aus der Polymerzusammensetzung um eine den mindestens einen elektrisch leitenden Kern umgebende Isolierschicht und/oder einen den von der Isolierschicht umgebenen mindestens einen elektrisch leitenden Kern umgebenden Mantel und/oder einen Zugentlastungsteil handelt.

## Revendications

1. Fil isolé, comprenant au moins un coeur électriquement conducteur et une partie d'une composition polymère, **caractérisé en ce que** la composition polymère contient :
(A) un sel métallique d'un acide phosphinique et/ou d'un acide diphosphinique, et/ou un polymère de celui-ci,
(B) du polyphosphate d'ammonium,
(C) un oligomère ou un polymère d'un dérivé de triazine.

2. Fil selon la revendication 1, dans lequel la composition polymère contient :
(A) un sel métallique d'un acide phosphinique de formule [R¹R²P(O)O]⁻ₘM^{m+} (formule I) et/ou d'un acide diphosphinique de formule [O(O)PR¹-R³-PR (0) O] ²⁻ₙMₓ^{m+} (formule II), et/ou un polymère de celui-ci, dans lesquels
- R¹ et R² sont des substituants identiques ou différents choisis dans le groupe constitué par l'hydrogène, les groupes aliphatiques en C1-C6 linéaires, ramifiés et cycliques, et les groupes aromatiques,
- R³ est choisi dans le groupe constitué par les groupes aliphatiques en C1-C10 linéaires, ramifiés et cycliques et les groupes aromatiques et aliphatiques-aromatiques en C6-C10,
- M est un métal choisi dans le groupe constitué par Mg, Ca, Al, Sb, Sn, Ge, Ti, Zn, Fe, Zr, Ce, Bi, Sr, Mn, Li, Na et K, et
- m, n et x sont des entiers identiques ou différents dans la gamme de 1-4,
(B) des particules de polyphosphate d'ammonium de forme cristalline II et/ou de dérivés, étant recouvertes de mélamine, de résine de mélamine, de dérivés de mélamine, de siloxanes ou de polystyrols, ou étant recouvertes et réticulées avec de la mélamine, de la résine de mélamine, des dérivés de mélamine, des siloxanes ou des polystyrols,
(C) des oligomères ou polymères de dérivé de 1,3,5-triazine ou d'un mélange de tels dérivés de formule générale 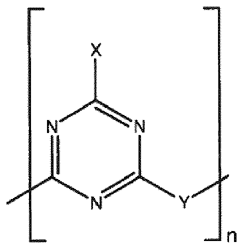 où
X est un résidu morpholino, un résidu pipéridino ou un groupe dérivé de la pipérazine,
Y est un groupe dérivé de la pipérazine, et
n est un entier valant au moins 3.

3. Fil selon l'une quelconque des revendications 1 et 2, dans lequel la composition polymère contient un élastomère de copolyester thermoplastique (TPE-E).

4. Fil selon l'une quelconque des revendications précédentes, dans lequel le composant (A) est le diméthylphosphinate d'Al, le méthyléthylphosphinate d'Al et/ou le diéthylphosphinate d'Al.

5. Fil selon l'une quelconque des revendications précédentes, dans lequel le composant (B) est du polyphosphate d'ammonium recouvert de mélamine ou d'une résine de mélamine ou recouvert de mélamine ou d'une résine de mélamine et réticulé avec de la mélamine.

6. Fil selon l'une quelconque des revendications précédentes, dans lequel le composant (C) est un polymère de 2-pipérazinyl-4-morpholino-1,3,5-triazine, de 2-pipéraxinylène-4-pipéridino-1,3,5-triazine ou de 2,4-pipérazine-1,4-yl-6-morpholine-4-yl-1,3,5-triazine.

7. Fil selon l'une quelconque des revendications précédentes, dans lequel la composition polymère contient un copolymère séquencé styrénique.

8. Fil selon l'une quelconque des revendications précédentes, dans lequel la composition polymère contient :
(D) un synergiste contenant de l'azote ou contenant de l'azote/du phosphore.

9. Fil selon l'une quelconque des revendications précédentes, dans lequel la composition polymère est constituée de :
3-10 % en poids de composant (A),
15-30 % en poids de composant (B) et (C), le rapport (B):(C) se situant entre 6:1 et 2:1,
0-10 % en poids de composant (D),
0,1-3 % en poids d'additifs habituels,
le complément étant des constituants polymères.

10. Fil selon la revendication 9, dans lequel la composition polymère est constituée de :
4-7 % en poids de composant (A),
15-25 % en poids de composant (B) et (C), le rapport (B):(C) se situant entre 5:1 et 3:1,
2-7 % en poids de composant (D),
0,1-3 % en poids d'additifs habituels,
le complément étant des constituants polymères.

11. Fil selon l'une quelconque des revendications précédentes, dans lequel la partie de la composition polymère est une couche isolante entourant l'au moins un coeur électriquement conducteur et/ou une gaine entourant l'au moins un coeur électriquement conducteur, entourée par la couche isolante et/ou une partie de relaxation des contraintes.
